# EUROPEAN PATENT SPECIFICATION

(11) **EP 4 406 783 B1**
(45) Date of publication and mention of the grant of the patent: **17.09.2025**
(21) Application number: 23153035.3
(22) Date of filing: 24.01.2023
(51) Int. Cl.: B60R 13/02

(54) **AN INTERIOR TRIM ASSEMBLY OF A VEHICLE, AND A VEHICLE COMPRISING SUCH AN INTERIOR TRIM ASSEMBLY**
INNENVERKLEIDUNGSANORDNUNG EINES FAHRZEUGS UND FAHRZEUG MIT SOLCH EINER INNENVERKLEIDUNGSANORDNUNG
ENSEMBLE DE GARNITURE INTÉRIEURE D'UN VÉHICULE ET VÉHICULE COMPRENANT UN TEL ENSEMBLE DE GARNITURE INTÉRIEURE

(43) Date of publication of application: 31.07.2024
(73) Proprietor: Motherson Innovations Company Limited, London EC2N 2AX (GB)
(72) Inventor: Nogaret, Eric, 68600 Biesheim (FR)
(74) Representative: Westphal, Mussgnug & Partner Patentanwälte mbB

(56) References cited:
- EP-B1- 3 665 042
- US-A1- 2018 143 689
- US-B2- 10 338 682

## Description

The present disclosure relates to an interior trim assembly of a vehicle. Moreover, the present disclosure relates to a vehicle comprising such an interior trim assembly.

In modern vehicles the number of available vehicle-related functions is constantly increasing. Such functions may be the activation of a window lifter, of the interior illumination, of the air condition, of a sound system or adjustment of rear-view mirrors. Next to the activation of the functions many of them comprise parameters that may be set. In case of air conditioning such parameters are the temperature of the air inside the vehicle that should be conditioned to or the intensity of the fans that circulate the air. In case of a sound system settable parameters may relate to the volume and the acoustics.

Modern vehicles are also equipped with a number of devices or systems which enhance the vehicle maneuver. These devices or systems may include lighting systems, driver assistance systems, communication systems, monitoring systems, air flow systems, energy absorbers or any other functional devices or systems. Such systems and devices may be manually controlled by activating or deactivating various parameters.

In many cases the activation and the setting are done by means of buttons or sensors located inside the vehicle interior trim parts.

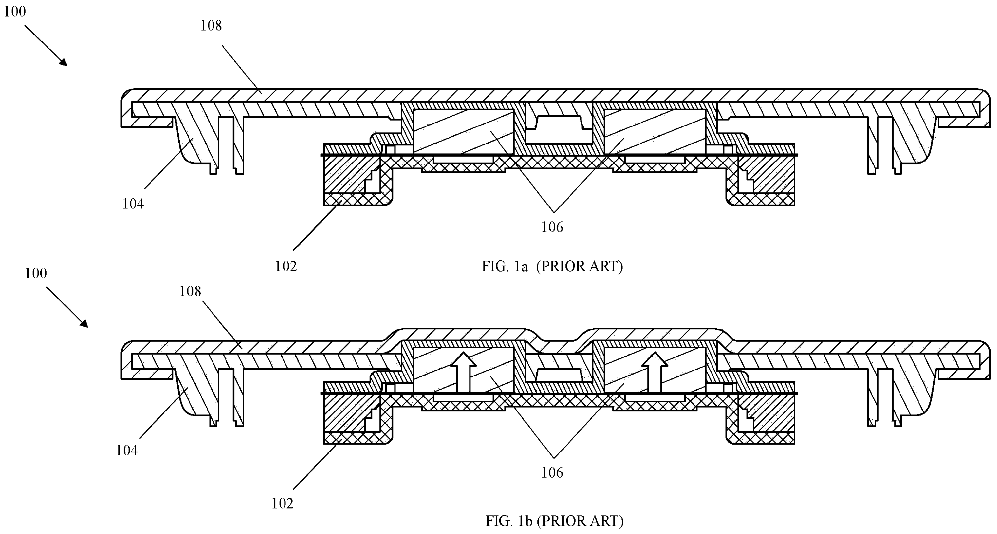

In recent approaches the activation and setting of vehicle-related functions are included into the surface of interior trim parts. In some of the interior trim parts, the surface includes protrusions for indicating the location of buttons or sensors for controlling various parameters of the vehicle. However, in recent approaches of enhancing the aesthetic appeal and beautification of the interior of the vehicle, the interior trim parts are made of surface having morphing functionality. That is to say, the protrusions appear on the surface of the interior trim part when activated. In such systems a complex mechanism such as an actuator is required for pushing the portion of the surface which enables the protrusions to appear on the surface of the trim part. One such system is shown in Figs.1a and 1b.

The system of Figs.1a and 1b comprises an actuator (not shown) placed vertically below the buttons/sensors 106. On activation, the actuator pushes the buttons/sensors 106 upward, which ultimately pushes the surface of the trim part, which enables the protrusions to appear on the surface. The drawback of such systems is that, it requires a complex pushing mechanism such as an actuator. Also, the displacement of the buttons is required to be substantial to observe the protrusion on the surface since the marked radius of the protrusion is not well defined in case of pushing up mechanism.

Another apparatus is disclosed in US10338682 B2, which comprises a method and apparatus for providing multi-point haptic feedback texture systems. The drawback of this apparatus is that collapsible or top surface of the apparatus is prone to damage and hence have short life span, since the collapsible or top surface is directly disposed on a surface pattern without any supporting material.

Further interior trim assemblies are described in US 2018/143689 A1 and EP 3 665 042 B1. More specifically, EP 3 665 042 B1 may disclose an interior trim assembly with features corresponding to those of the preamble of independent claim 1.

It is an object of the present disclosure to provide an interior trim assembly by which the drawbacks as mentioned above can be eliminated or at least reduced. In particular, it is one task to provide an interior trim assembly that reduces the use of complex pushing mechanism such as an actuator. It is also an object of the present disclosure to provide an interior trim assembly which has simple and reliable components and is cost effective. Moreover, the present disclosure has the object to provide a vehicle comprising such an interior trim assembly.

The objects are achieved by the combinations of features specified in claims 1 and 11, respectively. Advantageous embodiments are the subject of the dependent claims.

According to the invention, an interior trim assembly for a vehicle comprises:
- a carrier having at least one protruded portion and at least one non-protruded portion, wherein the carrier has at least one hole configured at the non-protruded portion;
- at least one of a button and a sensor disposed on the carrier at the at least one protruded portion, wherein the at least one of a button and a sensor is configured to receive input from a user;
- a décor layer disposed on the carrier, wherein an outer surface of the décor layer is visible to the user;
- compressible material disposed between the carrier and the décor layer at the at least one non-protruded portion of the carrier; and
- a vacuum unit connected to the at least one hole of the carrier, wherein the vacuum unit is configured to create vacuum between the carrier and the décor layer,
wherein the compressible material is configured to be compressed or decompressed when the vacuum is applied or withdrawn between the carrier and the décor layer, and wherein the décor layer is configured to move towards or away from the carrier when the vacuum is applied or withdrawn between the carrier and the décor layer.

According to the present disclosure the interior trim part includes the compressible material disposed between the carrier and the décor layer. The compressible material provides support to the décor layer. When the vacuum is applied, the compressible material being in direct contact with the décor layer, provides uniform pressure to the décor layer, which leads to uniform deformation of the décor layer towards the carrier. Another advantage of the present disclosure is that the protrusions formed on outer surface of the décor layer has well defined and marked radius since the décor layer moves towards the carrier instead of the button pushing the décor layer upward as compared to the prior art. Another advantage of the present disclosure is that a small displacement of the décor layer is sufficient for good appearance of protrusions on the outer surface of the décor layer. Another advantage of the present disclosure is that the interior trim assembly does not include any complex pushing mechanism such as an actuator. Instead, the interior trim assembly includes a simple vacuum unit for movement of the décor layer. Thus, the interior trim part is simple, reliable and cost effective.

The term "vehicle" denotes any motor driven vehicle with or without trailers driven be a driver, where the driver requires information about persons, other vehicles or objects in the (near) surrounding of the vehicle to be able to drive safety. As an example, vehicles are cars, trucks, tractors or trailers.

The term "décor layer" denotes an outermost layer of the interior trim assembly which is exposed to interior of the vehicle. The décor layer may be smooth during non-operational condition, i.e. when the vacuum is not applied between the décor layer and the carrier, and the protrusions appear on the surface of the décor layer during operational condition, i.e. when the vacuum is applied between the décor layer and the carrier.

The term "carrier" denotes a rigid structure which provides support to the interior trim assembly. The carrier may be a part of the vehicle component such as a door or an instrument panel or a dashboard of the vehicle. The carrier is configured to hold the components of the interior trim assembly in place and provides rigidity to the assembly.

The term "compressible material" denotes a material having low density, which can be easily compressed when pressure is applied and gets decompressed when pressure is released.

The term "vacuum unit" denotes a device for creating vacuum or negative pressure within an enclosure.

In another embodiment the interior trim assembly comprises an air sealing layer configured between an inner surface of the décor layer and the compressible material. The air sealing layer prevents any pressure leakage between the décor layer and the compressible material and thus enhances the vacuum performance without any pressure losses.

In another embodiment the interior trim assembly comprises a non-compressible grid disposed between the carrier and the compressible material. The non-compressible grid may be made of a mesh like structure for providing support to the compressible material. In particular, the non-compressible grid provides support to the compressible material when the vacuum is applied, such that it prevents the compressible material from dislocation.

In another embodiment the décor layer is configured to move at the non-protruded portion of the carrier. This enables the appearance of protrusion on the surface of the décor layer which indicates the position of buttons/sensors.

In another embodiment the carrier is made of a translucent material such as PC or PMMA or translucent polyolefin plastics for transmission of light through the carrier.

In another embodiment the carrier is made of an opaque material such as ABS-PC, ABS or PP.

In another embodiment the carrier further comprises at least one vacuum duct connecting the at least one hole of the carrier with the vacuum unit. This configuration can be used to connect multiple holes of the carrier with one vacuum unit.

In another embodiment the décor layer is made of PVC or PU or TPO or other sealed stretchable materials such as textile.

According to the invention, the décor layer is disposed on the carrier by using adhesive, themoplastic or thermodur glue or adhesive foils.

In another embodiment the compressible material comprises foam based on PUR, PE or silicon or polyester based 3D spacer.

In another embodiment the vacuum unit has operating pressure between -0.5 bar to -1 bar.

Another aspect of the present disclosure is directed to a vehicle, comprising an interior trim assembly according to one of the embodiments previously discussed. The technical effects and advantages as discussed with regard to the present interior trim assembly equally apply to the vehicle.

The present disclosure is described in detail with reference to the drawings attached wherein
Figures 1a and 1b illustrate sectional views of a trim part, according to prior art,
Figures 2a and 2b illustrate sectional views of an interior trim assembly according to an embodiment of the present disclosure,
Figure 3 illustrates a sectional view of the interior trim assembly of Figure 2 and a vacuum unit, according to an embodiment of the present disclosure,
Figure 4 illustrates a sectional view of an interior trim assembly, according to another embodiment of the present disclosure,
Figure 5 illustrates a sectional view of an interior trim assembly, according to another embodiment of the present disclosure,
Figure 6 illustrates a sectional view of an interior trim assembly, according to another embodiment of the present disclosure,
Figures 7a - 7c illustrate perspective views of an interior trim assembly, according to another embodiment of the present disclosure,
Figures 8a and 8b illustrate sectional views of the interior trim assembly, according to the embodiment of Figure 7.

Figure 1a shows a sectional view of a conventional trim part 100. The trim part 100 comprises a housing 102, buttons 106 mounted on the housing 102, a carrier 104 for supporting the buttons 106 and a décor layer 108 disposed over the carrier 104 and the buttons 106. The trim part 100 also comprises actuator(s) (not shown) for pushing the buttons 106 in an upward direction. When the actuator pushes the buttons 106 upward, the décor layer 108 being in direct contact with the buttons 106 also moves upward as shown in Figure 1b. Thus, protrusions on the surface of the décor layer 108 appear when actuator is activated. The drawback of the trim part 100 is that it requires a complex pushing mechanism such as an actuator. Also, the displacement of the buttons 106 is required to be substantial to observe the protrusion on the surface since the marked radius of the protrusion is not well defined in case of pushing up mechanism.

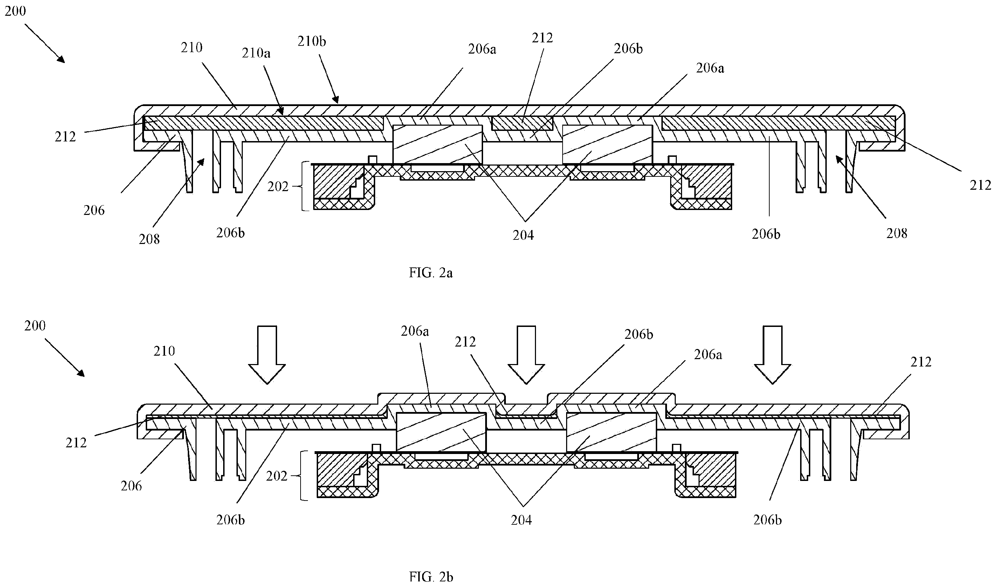

Figure 2a shows a sectional view of an interior trim assembly 200. The trim assembly 200 comprises a housing 202. The housing 202 may be disposed on a vehicle part, such as a door trim, center console, dashboard or instrument panel of the vehicle. The trim assembly 200 further comprises at least one button 204 mounted on the housing 202. In an embodiment the at least one button 204 may be replaced by at least one sensor. In another embodiment the trim assembly 200 may comprise both button and sensor. The trim assembly 200 further comprises a carrier 206. The carrier 206 may have at least one protruded portion 206a and at least one non-protruded portion 206b. The at least one protruded portion 206a of the carrier 206 is located vertically above each of the at least one button 204. The carrier 206 further comprises at least one hole 208 located at the at least one non-protruded portion 206b. The carrier 206 may be made of a translucent material such as PC or PMMA or translucent polyolefin plastics for light transmission. Such translucent material for carrier 206 is used when light transmission is required through the carrier 206 such as in case of illuminated trim parts. In another embodiment, the carrier 206 may be made of opaque material such as ABS-PC, ABS or PP.

The trim assembly 200 further comprises a décor layer 210. The décor layer 210 has an inner surface 210a and an outer surface 210b. The inner surface 210a of the décor layer 210 is configured to be disposed on the carrier 206 by using adhesive, Themoplastic or Thermodur glue or adhesive foils. The outer surface 210b of the décor layer 210 is exposed outside for user input. The décor layer 210 is made of PVC or PU or TPO or other sealed stretchable materials such as textile.

The trim assembly 200 further comprises a compressible material 212. The compressible material 212 disposed between the carrier 206 and the décor layer 210 at the at least one non-protruded portion 206b of the carrier 206. The compressible material 212 comprises foam based on PUR, PE or silicon or polyester based 3D spacer. The compressible material 212 is configured to be compressed (shown in figure 2b) when vacuum is applied, and decompressed when the vacuum is withdrawn.

Figure 2b shows a sectional view of the trim assembly 200 when protrusions appear on the décor layer 210. As shown in figure 2, the décor layer 210 is configured to move towards the carrier 206 at least partially when vacuum is applied between the carrier 206 and the inner surface 210a of the décor layer 210. The décor layer 210 is configured to move towards the carrier 206 at the non-protruded portion 206b of the carrier 206. Portions of the décor layer 210 which are above the protruded portion 206a of the carrier 206 remain in place, thus forming protrusions on the outer surface 210b of the décor layer 210.

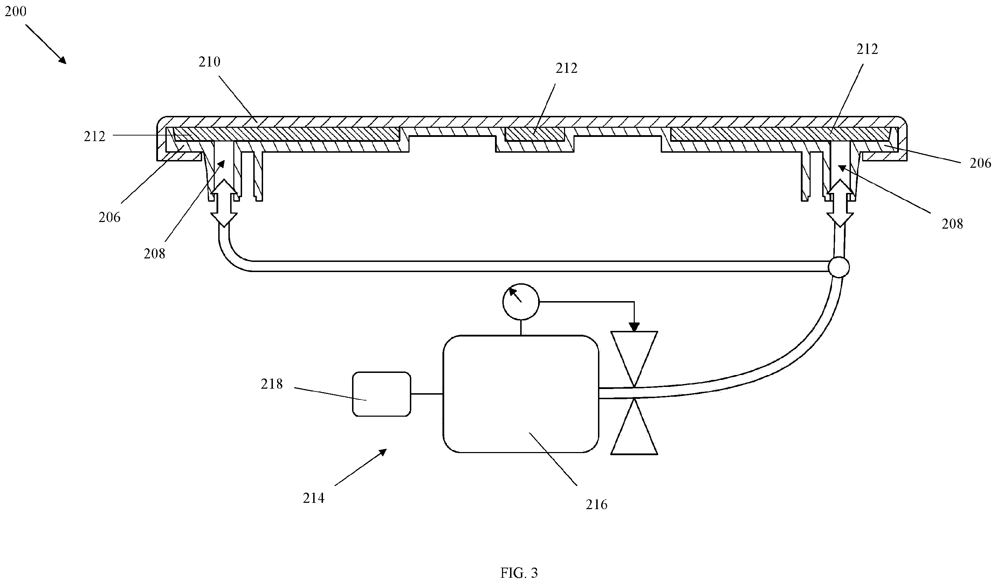

Figure 3 shows the trim assembly 200 as described in the above embodiment. The housing 202 and at least one button 204 are not shown in figure 3. The trim assembly 200 further comprises a vacuum unit 214. The vacuum unit 214 comprises a vacuum tank 216 and a vacuum pump 218. The vacuum unit 214 is connected to the carrier 206 via the at least one hole 208 of the carrier 206. The vacuum unit 214 is configured to apply vacuum between the carrier 206 and the décor layer 210. The vacuum unit 214 may have an operating pressure between -0.5 bar to -1 bar.

When the vacuum is applied, the compressible material 212 gets compressed and the portion of the décor layer 210 configured above the protruded portion 206a of the carrier 206 moves downward, forming the protrusions on the décor layer. When the vacuum is withdrawn, the compressible material 212 regains its original shape and the décor layer 210 moves back to its original position, thus the protrusions on the décor layer disappears.

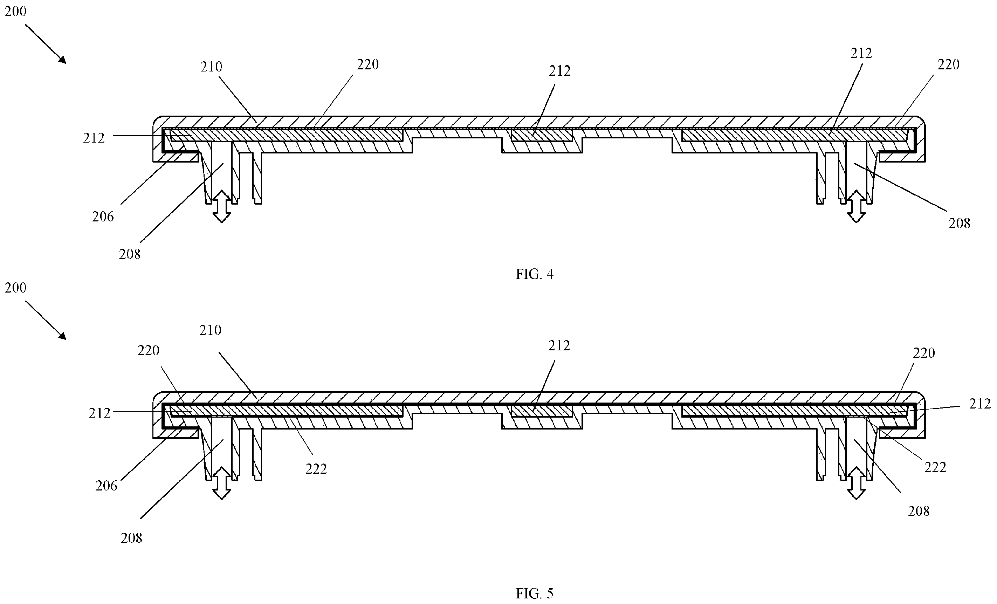

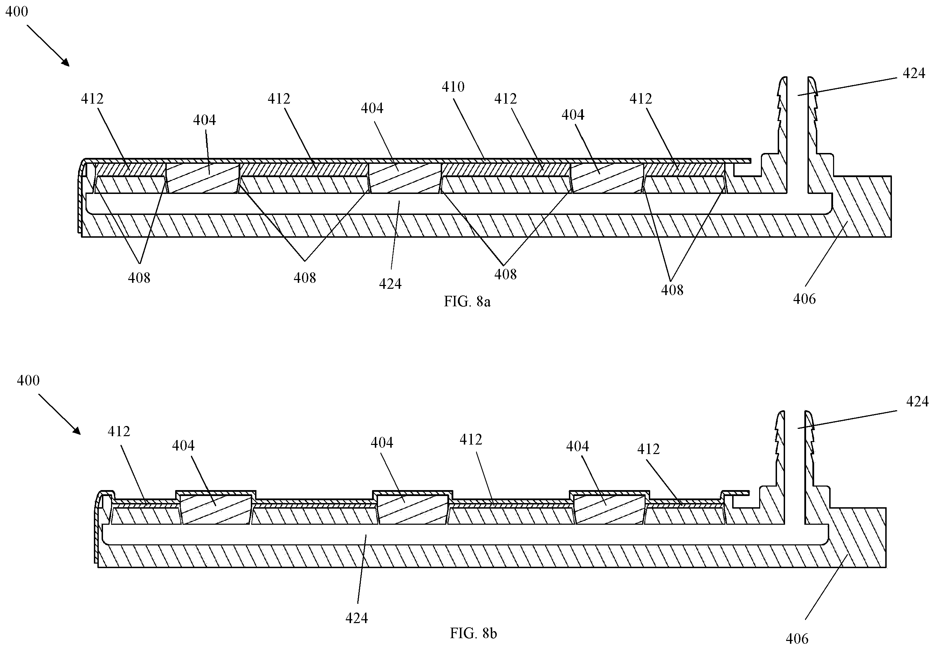

Figures 4 and 5 show the trim assembly 200 as described in the above embodiment. The housing 202 and at least one button 204 are not shown in figures 4 and 5. The trim assembly 200 further comprises an air sealing layer 220 configured between the inner surface 210a of the décor layer 210 and the compressible material 212 as shown in figure 4. The air sealing layer 220 is configured to provide air sealing effect between the carrier 206 and décor layer 210. The air sealing layer 220 is configured to prevent pressure leak and provide air sealed enclosure between the carrier 206 and the décor layer 210. Thus, the air sealing layer 220 enhances the vacuum performance without any pressure losses. The air sealing layer 220 may be made of closed PE, or PUR thin Foam. The air sealing layer 220 may be glued on the inner surface 210a of the décor layer 210. Alternatively, the glue itself may be used as an air sealing layer depending on the nature and texture of decor layer 210. The trim assembly 200 further comprises a non-compressible grid 222 disposed between the carrier 206 and the compressible material 212 as shown in figure 5. The non-compressible grid 222 may be made of a mesh like structure for providing support to the compressible material 212. The non-compressible grid 222 may provide support to the compressible material 212 when the vacuum is applied, thus preventing the compressible material 212 from dislocation. The non-compressible grid 222 may be glued on the carrier 206 and/or on the bottom of the compressible material 212. The non-compressible grid 222 is configured to allow air / pressure to pass through. The non-compressible grid 222 may be made of material which allows air to pass through such as Metal grid, or pet fabric. Alternatively, a grained structure may be provided on the top surface of the carrier 206 below the compressible material 212 to promote vacuum creation. The non-compressible grid 222 may not be used in case the at least one hole 408 (shown in Fig. 8a and 8b) is small.

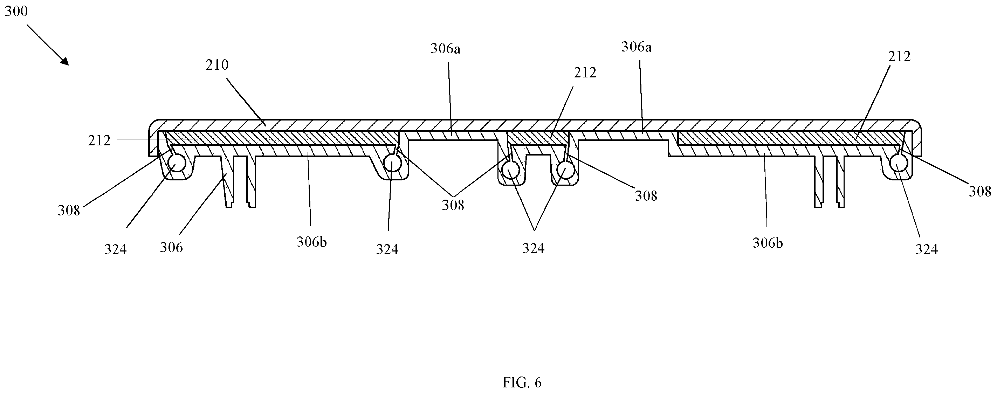

Figure 6 shows a sectional view of an interior trim assembly 300 according to another embodiment of the present disclosure. The trim assembly 300 of this embodiment is same as the embodiment described in the above embodiments except the design of the carrier 306. The carrier 306 comprises at least one vacuum duct 324 connected to the vacuum unit 214 (shown in figure 3). The at least one vacuum duct 324 is configured to connect at least one hole 308 of the carrier 306 with the vacuum unit 214. In this embodiment, each of the non-protruded portion 306b of the carrier 306 is connected to the at least one vacuum duct 324. The advantage of such a configuration is that a uniform distribution of vacuum throughout the non-protruded portion 306b of the carrier is possible.

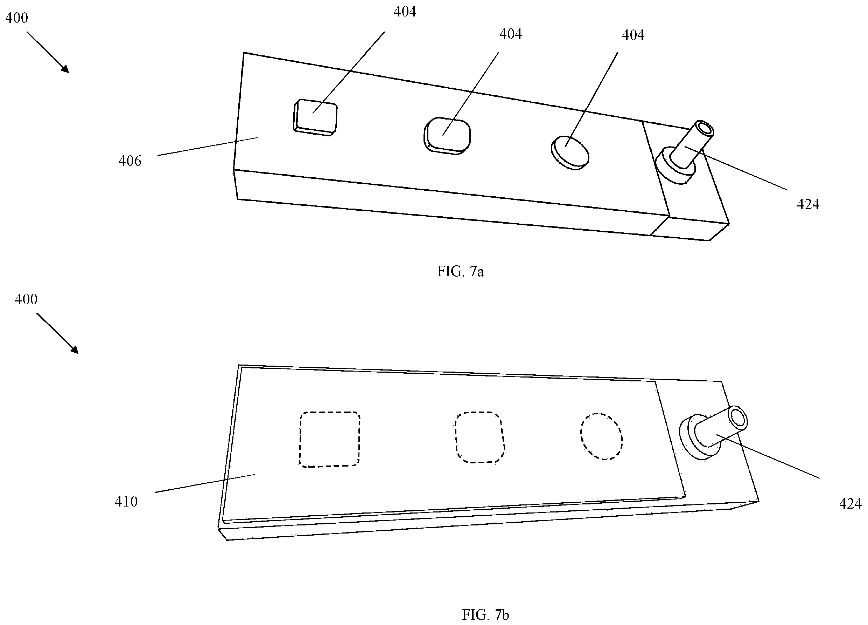

Figures 7a to 7c show perspective views of an interior trim assembly 400 according to another embodiment of the present disclosure. Figure 7a shows the trim assembly 400 with the décor layer removed. The trim assembly 400 comprises a carrier 406, at least one button 404 and a vacuum duct 424. The vacuum duct 424 may be connected to a vacuum unit 214 (shown in figure 3). The vacuum duct 424 may be connected to the at least one hole (not visible) of the carrier 406.

Figure 7b shows the trim assembly 400 with a décor layer 410 wrapped over the carrier 406 such that the at least one button 404 is not visible from outside. Figure 7b also shows that the décor layer 410 has a smooth appearance without any protrusions on the décor layer 410.

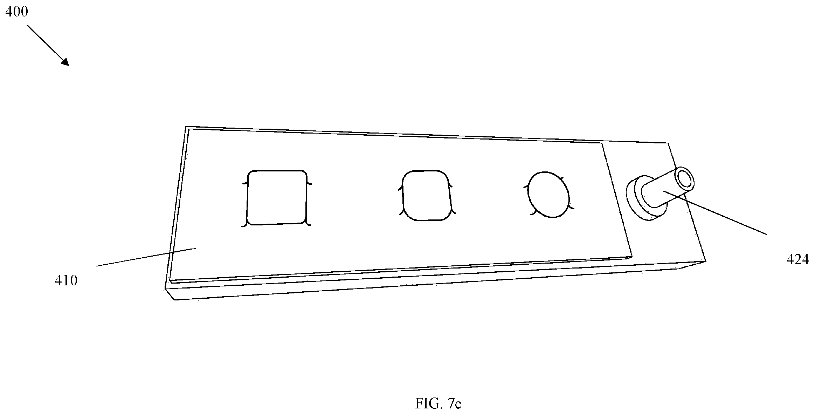

Figure 7c shows the trim assembly 400 with a décor layer 410 wrapped over the carrier 406 such that the at least one button 404 is not directly visible from outside, but the protrusions appear on the décor layer 410. Figure 7c also illustrate a state of the trim assembly 400 when the vacuum is applied between the carrier 406 and the inner surface of the décor layer 410.

Figures 8a and 8b show sectional views of the trim assembly 400 of figures 7a-7c. Figure 8a illustrates the trim assembly 400 when the décor layer 410 has smooth appearance and no protrusions appear on the décor layer 410. The trim assembly 400 of this embodiment has same operating principle as the previous embodiments described above with some design modifications in the carrier 406 which are described herein. The trim assembly 400 comprises the carrier 406 which comprises the vacuum duct 424 configured within the carrier 406. The vacuum duct 424 is connected to at least one hole 408 of the carrier 406. The trim assembly 400 further comprises at least one button 404 and a décor layer 410 disposed on the carrier 406. A compressible material 412 is disposed between the carrier 406 and the décor layer 410.

Figure 8b illustrates the trim assembly 400 when the décor layer 410 has protrusions. The compressible material 412 gets compressed and the décor layer 410 is configured to move towards the carrier 406 when the vacuum is applied.

Embodiment of the present disclosure also discloses a vehicle comprising the interior trim assembly 200, 300, 400.

### Reference list

- 100: trim part of prior art
- 102: housing of prior art
- 104: carrier of prior art
- 106: buttons of prior art
- 108: décor layer of prior art
- 200: trim assembly according to one embodiment
- 202: housing
- 204: at least one button
- 206: carrier
- 206a: protruded portion of carrier
- 206b: non-protruded portion of carrier
- 208: at least one hole
- 210: décor layer
- 210a: inner surface of décor layer
- 210b: outer surface of décor layer
- 212: compressible material
- 214: vacuum unit
- 216: vacuum tank
- 218: vacuum pump
- 220: air sealing layer
- 222: non-compressible grid
- 300: trim assembly according to another embodiment
- 306: carrier
- 306a: protruded portion of carrier
- 306b: non-protruded portion of carrier
- 308: at least one hole
- 324: vacuum duct
- 400: trim assembly according to another embodiment
- 404: at least one button
- 406: carrier
- 408: at least one hole
- 410: décor layer
- 412: compressible material
- 424: vacuum duct

## Claims

1. An interior trim assembly (200, 300, 400) for a vehicle comprising:
- a carrier (206, 306, 406) having at least one protruded portion (206a, 306a) and at least one non-protruded portion (206b, 306b), wherein the carrier (206, 306, 406) has at least one hole (208, 308, 408) configured at the non-protruded portion (206b, 306b);
- at least one of a button (204, 404) and a sensor disposed on the carrier (206, 306, 406) at the at least one protruded portion (206a, 306a), wherein the at least one of the button (204, 404) and the sensor is configured to receive input from a user;
- a décor layer (210, 410) disposed on the carrier (206, 306, 406), wherein an outer surface (210b) of the décor layer (210, 410) is visible to the user;
- compressible material (212, 412) disposed between the carrier (206, 306, 406) and the décor layer (210, 410) at the at least one non-protruded portion (206b, 306b) of the carrier (206, 306, 406); and
- a vacuum unit (214) connected to the at least one hole (208, 308, 408) of the carrier (206, 306, 406), wherein the vacuum unit (214) is configured to create vacuum between the carrier (206, 306, 406) and the décor layer (210, 410),
wherein the compressible material (212, 412) is configured to be compressed or decompressed when the vacuum is applied or withdrawn between the carrier (206, 306, 406) and the décor layer (210, 410), and wherein the décor layer (210, 410) is configured to move towards or away from the carrier (206, 306, 406) when the vacuum is applied or withdrawn between the carrier (206, 306, 406) and the décor layer (210, 410),
**characterized in that** the décor layer (210, 410) is disposed on the carrier (206, 306, 406) by using adhesive made of Themoplastic or Thermodur glue or adhesive foils.

2. The interior trim assembly (200) as claimed in claim 1, further comprises an air sealing layer (220) configured between an inner surface (210a) of the décor layer (210) and the compressible material (212).

3. The interior trim assembly (200) as claimed in claim 1, further comprises a non-compressible grid (222) disposed between the carrier (206) and the compressible material (212).

4. The interior trim assembly (200, 300, 400) as claimed in claim 1, wherein the décor layer (210, 410) is configured to move at the non-protruded portion (206b, 306b) of the carrier (206, 306, 406).

5. The interior trim assembly (200, 300, 400) as claimed in claim 1, wherein the carrier (206, 306, 406) is made of a translucent material such as PC or PMMA or translucent polyolefin plastics for transmission of light through the carrier (206, 306, 406).

6. The interior trim assembly (200, 300, 400) as claimed in claim 1, wherein the carrier (206, 306, 406) is made of an opaque material such as ABS-PC, ABS or PP.

7. The interior trim assembly (300, 400) as claimed in claim 1, wherein the carrier (306, 406) further comprises at least one vacuum duct (324, 424) connecting the at least one hole (308, 408) of the carrier (306, 406) with the vacuum unit (214).

8. The interior trim assembly (200, 300, 400) as claimed in claim 1, wherein the décor layer (210, 410) is made of PVC or PU or TPO or other sealed stretchable materials such as textile.

9. The interior trim assembly (200, 300, 400) as claimed in claim 1, wherein the compressible material (212, 412) comprises foam based on PUR, PE or silicon or polyester based 3D spacer.

10. The interior trim assembly (200, 300, 400) as claimed in claim 1, wherein the vacuum unit (214) has operating pressure between -0.5 bar to -1 bar.

11. A vehicle, comprising an interior trim assembly (200, 300, 400) according to one of the preceding claims.

## Patentansprüche

1. Innenverkleidungsanordnung (200, 300, 400) für ein Fahrzeug, die aufweist:
- einen Träger (206, 306, 406) mit zumindest einem vorstehenden Abschnitt (206a, 306a) und zumindest einem nicht vorstehenden Abschnitt (206b, 306b), wobei der Träger (206, 306, 406) zumindest ein Loch (208, 308, 408), das an dem nicht vorstehenden Abschnitt (206b, 306b) gebildet ist, aufweist;
- zumindest einen von einem Knopf (204, 404) und einem Sensor, der an dem Träger (206, 306, 406) an dem zumindest einen vorstehenden Abschnitt (206a, 306a) angeordnet ist, wobei der zumindest eine von dem Knopf (204, 404) und dem Sensor dazu ausgebildet ist, eine Eingabe von einem Benutzer zu empfangen;
- eine Dekorschicht (210, 410), die auf dem Träger (206, 306, 406) angeordnet ist, wobei eine Außenfläche (210b) der Dekorschicht (210, 410) für den Benutzer sichtbar ist;
- ein komprimierbares Material (212, 412), das zwischen dem Träger (206, 306, 406) und der Dekorschicht (210, 410) an dem zumindest einen nicht vorstehenden Abschnitt (206b, 306b) des Trägers (206, 306, 406) angeordnet ist; und
- eine Vakuumeinheit (214), die mit dem zumindest einen Loch (208, 308, 408) des Trägers (206, 306, 406) verbunden ist, wobei die Vakuumeinheit (214) dazu ausgebildet ist, zwischen dem Träger (206, 306, 406) und der Dekorschicht (210, 410) ein Vakuum zu erzeugen,
wobei das komprimierbare Material (212, 412) dazu ausgebildet ist, komprimiert oder dekomprimiert zu werden, wenn das Vakuum zwischen dem Träger (206, 306, 406) und der Dekorschicht (210, 410) angelegt oder zurückgenommen wird, und wobei die Dekorschicht (210, 410) dazu ausgebildet ist, sich in Richtung auf den Träger (206, 306, 406) zu oder von diesem weg zu bewegen, wenn das Vakuum zwischen dem Träger (206, 306, 406) und der Dekorschicht (210, 410) angelegt oder zurückgenommen wird, **dadurch gekennzeichnet, dass** die Dekorschicht (210, 410) unter Verwendung eines Klebstoffs aus thermoplastischem oder thermohärtendem Klebstoff oder Klebefolien auf dem Träger (206, 306, 406) angeordnet ist.

2. Innenverkleidungsanordnung (200) nach Anspruch 1, die weiterhin eine zwischen einer Innenfläche (210a) der Dekorschicht (210) und dem komprimierbaren Material (212) ausgebildete luftdichtende Schicht (220) aufweist.

3. Innenverkleidungsanordnung (200) nach Anspruch 1, die weiterhin ein nicht komprimierbares Gitter (222), das zwischen dem Träger (206) und dem komprimierbaren Material (212) angeordnet ist, aufweist.

4. Innenverkleidungsanordnung (200, 300, 400) nach Anspruch 1, wobei die Dekorschicht (210, 410) dazu ausgebildet ist, sich an dem nicht vorstehenden Abschnitt (206b, 306b) des Trägers (206, 306, 406) zu bewegen.

5. Innenverkleidungsanordnung (200, 300, 400) nach Anspruch 1, wobei der Träger (206, 306, 406) zum Durchlassen von Licht durch den Träger (206, 306, 406) aus einem lichtdurchlässigen Material wie etwa PC oder PMMA oder lichtdurchlässigem Polyolefin-Kunststoff hergestellt ist.

6. Innenverkleidungsanordnung (200, 300, 400) nach Anspruch 1, wobei der Träger (206, 306, 406) aus einem undurchsichtigen Material wie etwa ABS-PC, ABS oder PP besteht.

7. Innenverkleidungsanordnung (300, 400) nach Anspruch 1, wobei der Träger (306, 406) weiterhin zumindest einen Vakuumkanal (324, 424), der das zumindest eine Loch (308, 408) des Trägers (306, 406) mit der Vakuumeinheit (214) verbindet, aufweist.

8. Innenverkleidungsanordnung (200, 300, 400) nach Anspruch 1, wobei die Dekorschicht (210, 410) aus PVC oder PU oder TPO oder anderen versiegelten dehnbaren Materialien wie etwa Textilien besteht.

9. Innenverkleidungsanordnung (200, 300, 400) nach Anspruch 1, wobei das komprimierbare Material (212, 412) Schaum auf Basis von PUR, PE oder Silikon oder einen 3D-Abstandhalter auf Polyesterbasis aufweist.

10. Innenverkleidungsanordnung (200, 300, 400) nach Anspruch 1, wobei die Vakuumeinheit (214) einen Betriebsdruck zwischen -0,5 bar und -1 bar aufweist.

11. Fahrzeug, das eine Innenverkleidungsanordnung (200, 300, 400) nach einem der vorstehenden Ansprüche aufweist.

## Revendications

1. Un ensemble (200, 300, 400) de garniture intérieure d'un véhicule comprenant :
- un support (206, 306, 406) ayant au moins une partie (206a, 306a) qui est en saillie et au moins une partie (206b, 306b) qui n'est pas en saillie, dans lequel le support (206, 306, 406) a au moins un trou (208, 308, 408) configuré dans la partie (206b, 306b) qui n'est pas en saillie ;
- au moins l'un d'un bouton (204, 404) et d'un capteur disposé sur le support (206, 306, 406) à la au moins une partie (206a, 306a) qui est en saillie, dans lequel le au moins du bouton (204, 404) et du capteur est configuré pour recevoir une entrée d'un utilisateur ;
- une couche (210, 410) de décor disposée sur le support (206, 306, 406), dans lequel une surface (210b) extérieure de la couche (210, 410) de décor est visible par l'utilisateur ;
- du matériau (212, 412) compressible disposé entre le support (206, 306, 406) et la couche (210, 410) de décor à la au moins une partie (206b, 306b) qui n'est pas en saillie du support (206, 306, 406) ; et
- une unité (214) donnant le vide, communiquant avec au moins un trou (208, 308, 408) du support (206, 306, 406), dans lequel l'unité (214) donnant le vide est configurée pour créer du vide entre le support (206, 306, 406) et la couche (210, 410) de décor,
dans lequel le matériau (212, 412) compressible est configuré pour être comprimé ou décomprimé lorsque le vide est appliqué ou retiré entre le support (206, 306, 406) et la couche (210, 410) de décor et dans lequel la couche (210, 410) de décor est configurée pour aller vers le support (206, 306, 406) ou pour s'en éloigner lorsque le vide est appliqué ou retiré entre le support (206, 306, 406) et la couche (210, 410) de décor,
**caractérisé en ce que** la couche (210, 410) de décor est disposée sur le support (206, 306, 406) en utilisant un adhésif fait d'une colle thermoplastique ou thermodurcissable ou de feuilles adhésives.

2. L'ensemble (200) de garniture intérieure tel que revendiqué à la revendication 1, comprenant en outre une couche (220) d'étanchéité à l'air, configurée entre une surface (210a) intérieure de la couche (210) de décor et le matériau (212) compressible.

3. L'ensemble (200) de garniture intérieure tel que revendiqué à la revendication 1, comprenant en outre une grille (222) non compressible, disposée entre le support (206) et le matériau (212) compressible.

4. L'ensemble (200, 300, 400) de garniture intérieure tel que revendiqué à la revendication 1, dans lequel la couche (210, 410) de décor et configurée pour aller à la partie (206b, 306b) qui n'est pas en saillie du support (206, 306, 406).

5. L'ensemble (200, 300, 400) de garniture intérieure tel que revendiqué à la revendication 1, dans lequel le support (206, 306, 406) est en un matériau translucide, tel qu'en PC ou PMMA ou en une matière plastique polyoléfine translucide, pour la transmission de lumière à travers le support (206, 306, 406).

6. L'ensemble (200, 300, 400) de garniture intérieure tel que revendiqué à la revendication 1, dans lequel le support (206, 306, 406) est en un matériau opaque tel que ABS-PC, ABS ou PP.

7. L'ensemble (300, 400) de garniture intérieure tel que revendiqué à la revendication 1, dans lequel le support (306, 406) comprend en outre au moins un conduit (324, 424) pour le vide mettant le au moins un trou (308, 408) du support (306, 406) en communication avec l'unité (214) donnant du vide.

8. L'ensemble (200, 300, 400) de garniture intérieure tel que revendiqué à la revendication 1, dans lequel la couche (210, 410) de décor est en PVC ou en PU ou en TPO ou en d'autres matériaux étirables étanchéifiés tel que du textile.

9. L'ensemble (200, 300, 400) de garniture intérieure tel que revendiqué à la revendication 1, dans lequel le matériau (212, 412) compressible comprend de la mousse à base de PUR, de PE ou de silicone ou un intercalaire en 3D à base de polyester.

10. L'ensemble (200, 300, 400) de garniture intérieure tel que revendiqué à la revendication 1, dans lequel l'unité (214) donnant du vide a une pression de fonctionnement comprise entre -0,5 bar et -1 bar.

11. Un véhicule comprenant un ensemble (200, 300, 400) de garniture intérieure suivant l'une des revendications précédentes.
